# EUROPÄISCHE PATENTSCHRIFT

(11) **EP 1 577 138 B1**
(45) Veröffentlichungstag und Bekanntmachung des Hinweises auf die Patenterteilung: **19.08.2009**
(21) Anmeldenummer: 04028790.6
(22) Anmeldetag: 04.12.2004
(51) Int. Cl.: B60K 6/48, B60W 10/06, B60W 10/08, B60W 20/00, F02P 5/15

(54) **Verfahren zum Betreiben eines Hybrid-Kraftfahrzeugs**
Operating method for a hybrid vehicle
Procédé de mise en ouevre d'un véhicule hybride

(30) Priorität: 20.03.2004 DE 102004013812
(43) Veröffentlichungstag der Anmeldung: 21.09.2005
(73) Patentinhaber: Volkswagen AG, 38436 Wolfsburg (DE); Skoda Auto a.s., 293 60 Mlada Boleslav (CZ)
(72) Erfinder: Zillmer, Michael, 38173 Sickte (DE); Holz, Matthias, 38165 Lehre (DE); Pott, Ekkehard, Dr., 38518 Gifhorn (DE); Prochazka, David, 50745 Libosovice (CZ)

(56) Entgegenhaltungen:
- EP-B1- 1 203 270
- DE-A1- 10 232 805
- DE-A1- 19 839 315
- US-B1- 6 192 847

## Beschreibung

Die Erfindung betrifft ein Verfahren zum Betreiben eines Hybrid-Kraftfahrzeugs mit einer Brennkraftmaschine und mindestens einer elektrischen Maschine, wobei beim Übergang von einem ersten Betriebszustand mit einem ersten Antriebsmoment in einen zweiten Betriebszustand mit einem niedrigeren zweiten Antriebsmoment vor dem Umschalten in den zweiten Betriebszustand ein Antriebsmoment der Brennkraftmaschine über einen Abbau einer Zylinderfüllung und/oder ein Schließen einer Drosselklappe verringert wird, gemäß dem Oberbegriff des Patentanspruchs 1.

Um einen möglichst hohen Fahrkomfort bei Fahrzeugen mit Verbrennungsmotoren zu erreichen, ist es insbesondere bei instationären Betriebsphasen notwendig, keine Drehmomentsprünge im Antriebsstrang zu erzeugen, da diese ein Fahrzeugruckeln bzw. eine Schwingung im Antriebsstrang erzeugen können, was vom Fahrer als sehr unangenehm empfunden wird. So werden bei heutigen Steuerungen von Verbrennungsmotoren zum Teil sehr umfangreiche Funktionen implementiert, die gewährleisten sollen, dass solche Momentensprünge vermieden werden.

Ein bei einem Verbrennungsmotor bekanntes Problem sind Ruckelschwingungen beim Übergang aus dem gefeuerten Betrieb in den ungefeuerten Betrieb (Schubabschaltung). Hierbei kann die Kraftstoffeinspritzung bzw. ggf. auch die Zündung nicht schlagartig abgestellt werden, falls durch den Fahrer ausgehend von einer Momentenanforderung (Gaspedal teilweise oder voll durchgetreten) auf das Motorschleppmoment (Schubabschaltung bzw. Gaspedal in Stellung gleich null Prozent) gewechselt wird. Der aus der Differenz zwischen dem Motormoment bei gefeuertem Betrieb und dem Motorschleppmoment resultierende Momentensprung nimmt bei höherem Antriebsmoment vor der Schubabschaltung zu.

Um diesen Momentensprung zu verringern, wird in heute ausgeführten Motorsteuerungen in der Regel eine Dashpot-Funktion implementiert, die durch einen allmählichen Momentenabbau bei gefeuertem Motor entsprechend einem vorgebbaren zeitlichen Verlauf, beispielsweise durch Zylinderfüllungsabbau (Schließen der Drosselklappe, Ottomotor direkt oder indirekt einspritzend bei Homogenbetrieb) und/oder Verringerung der Einspritzmasse (direkteinspritzender Ottomotor im Schichtbetrieb oder Dieselmotor) zunächst das Moment auf den minimal möglichen Wert absenkt wird, um dann von einem möglichst geringen Moment bei gefeuertem Betrieb in die Schubabschaltung zu wechseln.

Da die Entlastung des Gaspedals durch den Fahrer in den meisten Fahrzuständen sehr schnell vollzogen wird, wird vom Fahrer auch ein entsprechend schneller Momentenabbau erwartet. Während bei einer Regulierung des Momentes über die Einspritzmasse ein rascher Momentenabbau möglich ist, da die Einspritzmasse von einem zum nächsten Arbeitszyklus verändert werden kann, erfordert der Momentenabbau über den Füllungspfad eine größere Zeitspanne (langsamer Pfad), da auch bei den heute eingesetzten elektronischen Drosselklappen nur endliche Verstellgeschwindigkeiten erreicht werden und zu dem auch das zwischen Drosselklappe und Einlassventil befindliche Saugrohrvolumen evakuiert werden muss. Aus diesem Grund wird bei Ottomotoren im Homogenbetrieb häufig parallel zum Füllungsabbau mit Zündwinkeleingriffen gearbeitet (schneller Pfad), um das Antriebsmoment entsprechend dem vorgegebenen Sollverlauf (Dashpot-Funktion) abbauen zu können. Diese Zündwinkelverspätungen haben jedoch einen Kraftstoffverbrauchsnachteil zur Folge, da die wirkungsgradoptimalen Betriebspunkte verlassen werden.

Das minimal darstellbare Moment im gefeuerten Betrieb (während des Dashpot-Ablaufes und unmittelbar vor der Schubabschaltung) wird bei einem homogen betriebenen Ottomotor in der Regel durch die minimal zulässige Füllung in Kombination mit dem zugehörigen spätest möglichen Zündwinkel bestimmt. Werden geringere Zylinderfüllungen eingestellt und/oder der Zündwinkel weiter verspätet, wird die Brenngrenze unterschritten, das heißt die Verbrennung im Zylinder läuft dann nur noch unzureichend bzw. überhaupt nicht mehr ab. Wird bei einem direkteinspritzenden Ottomotor im Schichtbetrieb (oder auch beim Dieselmotor) das Moment über die Einspritzmasse verringert, ergibt sich die Grenze hierbei entweder durch die minimal mögliche Einspritzmasse der Injektoren, da bei Magnetventil-Injektoren zu kurze Ansteuerdauern in der Regel dazu führen, dass die Düsennadel nicht mehr den Endanschlag erreicht, was zu undefinierten Düsennadelpositionen und damit undefinierten Einspritzmassen führt, oder durch ein maximal zulässiges Verbrennungsluftverhältnis (Entflammungsgrenze) bestimmt. Prinzipbedingt bleibt somit stets ein restlicher Momentensprung bestehen.

Aufgrund des Momentenabbaus über die Füllung und die Begrenzung der Zündwinkelspätverstellung ergeben sich insbesondere beim homogen betriebenen Ottomotor Nachteile selbst bei Ausführung der Dashpot-Funktion.

Aus der DE 198 39 315 A1 die ein Verfahren nach Anspruch 1 offenbart, ist ein Antriebssystem für ein Kraftfahrzeug mit einem Verbrennungsmotor, einer elektrischen Maschine und einer Einrichtung zur Schubabschaltung des Verbrennungsmotors bekannt, wobei die elektrische Maschine den Verbrennungsmotor mit einem Drehmoment derart beaufschlagt, dass eine ruckvermindernde Wirkung herbeigeführt wird. Für eine Verminderung des durch ein Beenden der Schubabschaltung verursachten Beschleunigungsruckes wird die elektrische Maschine mit Hilfe des Aktivierungs- und Deaktivierungssignals der Schubabschaltung gesteuert. Auf diese Weise kann die elektrische Maschine dem anstehenden Beschleunigungsruck vorzeitig entgegenwirken, noch bevor dieser für die Fahrzeuginsassen bemerkbar wird oder möglicherweise zu Lastwechselschwingungen führt. Zur Ruckvermeidung kann die elektrische Maschine vorteilhaft als Motor und als Generator wirken, je nachdem ob der zu dämpfende Ruck von der Aktivierung oder der Deaktivierung der Schubabschaltung herrührt.

Der Erfindung liegt die Aufgabe zugrunde, ein Verfahren der oben genannten Art mit verbesserter Dashpot-Funktion zur Verfügung zu stellen.

Diese Aufgabe wird erfindungsgemäß durch ein Verfahren der o.g. Art mit den in Anspruch 1 gekennzeichneten Merkmalen gelöst. Vorteilhafte Ausgestaltungen der Erfindung sind in den weiteren Ansprüchen beschrieben.

Dazu ist es bei einem Verfahren der o.g. Art erfindungsgemäß vorgesehen, dass während der Verringerung des Antriebsmomentes mittels des Abbaus der Zylinderfüllung und/oder Schließens der Drosselklappe ein Zündwinkel in Abhängigkeit von der momentanen Zylinderfüllung und/oder in Abhängigkeit von der momentanen Stellung der Drosselklappe auf einen Wert eingestellt wird, welcher für diese momentane Zylinderfüllung und/oder für diese momentane Stellung der Drosselklappe einen optimalen bzw. näherungsweise optimalen Wirkungsgrad der Brennkraftmaschine ergibt, wobei zusätzlich das Antriebsmoment über ein dem Antriebsmoment entgegen gesetzt wirkendes Gegenmoment mindestens einer der elektrischen Maschinen verringert wird.

Dies hat den Vorteil, dass der schnelle jedoch verbrauchs-, schadstoff- und für Katalysatoren alterungsungünstige Eingriff über den Zündwinkel zum Verringern des Antriebsmomentes der Brennkraftmaschine durch einen Eingriff mittels der elektrischen Maschine ersetzt ist, so dass mittels der elektrischen Maschine eine stufenlose Einstellung des Momentes (positiv wie negativ) während der Verringerung des Antriebsmomentes, beispielsweise für eine Schubabschaltung, im gesamten Betriebsbereich der Brennkraftmaschine mit sehr hoher Dynamik möglich ist. Dies erzielt eine Optimierung des Fahrverhaltens beispielsweise bei Umschaltung in den Schubbetrieb, Betrieb mit minimalem Antriebsmoment oder automatisierter Umschaltung eines Getriebes mit verringertem Kraftstoffverbrauch und verringerter Katalysatoralterung.

Zweckmäßigerweise wird mindestens eine der elektrischen Maschinen zum Verringern des Antriebsmomentes generatorisch betrieben, wobei eine dadurch erzeugte elektrische Energie in einem Energiespeicher, wie beispielsweise einem Batteriespeicher oder einem Kondensatorspeicher, gespeichert wird. Dadurch kann diese elektrische Energie im weiteren Verlauf der Fahrt für eine elektromotorische Antriebsunterstützung oder die Versorgung des Fahrzeugbordnetzes genutzt werden. Hierdurch wird zumindest ein Teil der sonst durch Zündwinkelspätverstellung in vielen Betriebsphasen ohne Nutzen in Abgas- bzw. Kühlmittelwärme umgewandelte Energie genutzt, was den Gesamtwirkungsgrad erhöht.

Beispielsweise ist der erste Betriebszustand ein gefeuerter Betrieb, der zweite Betriebszustand ein ungefeuerter Betrieb und das zweite Antriebsmoment ein Motorschleppmoment. Hierbei wird eine Befeuerung der Brennkraftmaschine unterbrochen und in einen ungefeuerten Betrieb übergegangen, wenn die Zylinderfüllung bei zumindest nahezu wirkungsgradoptimalem Zündwinkel die Brenngrenze erreicht. Bevorzugt werden dabei unmittelbar vor dem Übergang in den ungefeuerten Betrieb die Zylinderfüllung und der Zündwinkel auf jeweilige Werte mit größerem Abstand zur Brenngrenze gestellt. Beispielsweise wird unmittelbar vor dem Übergang in den ungefeuerten Betrieb die Zylinderfüllung ausgehend von einem Wert an der Brenngrenze um 0,5% bis 6%, insbesondere 1 % bis 3%, erhöht und/oder unmittelbar vor dem Übergang in den ungefeuerten Betrieb der Zündwinkel ausgehend von einem Wert an der Brenngrenze um mindestens 3°KW, insbesondere mindestens 6°KW nach früh verstellt.

Einen Übergang in den ungefeuerten Betrieb ohne Momentensprung mit entsprechend erhöhtem Fahrkomfort erzielt man dadurch, dass nach dem Übergang in den ungefeuerten Betrieb mindestens eine der elektrischen Maschinen ein antreibendes Moment derart in einem Antriebsstrang der Brennkraftmaschine erzeugt, dass ein zeitlicher Verlauf des Antriebsmomentes vom momentanen Antriebsmoment zum Zeitpunkt der Umschaltung in den ungefeuerten Betrieb bis zu einem Motorschleppmoment im ungefeuerten Betrieb der Brennkraftmaschine stufenlos verläuft.

Alternativ ist der erste Betriebszustand eine Fahrt mit einer ersten Getriebeübersetzung und der zweite Betriebszustand eine Fahrt mit einer zweiten, von der ersten Getriebeübersetzung unterschiedlichen Getriebeübersetzung.

Um einen möglichst ruckfreien Übergang in den zweiten Betriebszustand zu erhalten, wird beim Übergang in den zweiten Betriebszustand für eine vorbestimmte Zeitdauer von beispielsweise 10 ms bis 100 ms das Antriebsmoment über einen Zündwinkeleingriff verringert wird.

Zweckmäßigerweise ist zur Verringerung des Antriebsmoment über die Zeit ein Drehmoment-Sollverlauf über die Zeit vorbestimmt und erzeugt die elektrische Maschine während der Verringerung des Antriebsmomentes ein derartiges Gegenmoment, dass ein Ist-Verlauf des Antriebsmomentes über die Zeit dem Drehmoment-Sollverlauf folgt.

Die Erfindung wird im Folgenden anhand der Zeichnung näher erläutert. Diese zeigt in der einzigen Fig. eine graphische Darstellung des zeitlichen Verlaufes von Gaspedalstellung, Zylinderfüllung, Zündwinkel, Moment, welches von einer elektrischen Maschine aufgebracht wird, und gesamtes Antriebsmoment im Antriebsstrang.

Das erfindungsgemäße Verfahren zum Betreiben eines Hybridfahrzeugs mit Brennkraftmaschine und beispielhaft einer angekoppelten elektrischen Maschine ist in der einzigen Fig. graphisch veranschaulicht. In der einzigen Fig. ist auf einer vertikalen Achse bei 10 ein Winkel einer Pedalstellung in Prozent [%], bei 12 eine relative Zylinderfüllung in Prozent [%] (aktueller Wert bezogen auf die maximal mögliche Zylinderfüllung), bei 14 ein Zylinderwinkel in Grad Kurbelwinkel [°KW], bei 16 ein von der elektrischen Maschine im Antriebsstrang erzeugtes Moment in Newton-Meter [Nm] und bei 18 ein gesamtes Antriebsmoment im Antriebsstrang in Newton-Meter [Nm] aufgetragen. Ein Pfeil 20 kennzeichnet eine Verstellung des Zündwinkels 14 nach früh und ein Pfeil 22 kennzeichnet eine Verstellung des Zündwinkels 14 nach spät.

Auf einer horizontalen Achse 24 ist die Zeit aufgetragen. Ein Graph 26 veranschaulicht den Verlauf der Pedalstellung 10 über die Zeit 24, ein Graph 28 veranschaulicht den Verlauf der relativen Zylinderfüllung 12 über die Zeit 24, ein Graph 30 veranschaulicht den Verlauf des Zündwinkels 14 über die Zeit 24, ein Graph 32 veranschaulicht den Verlauf des Momentes 16 der elektrischen Maschine über die Zeit 24 und ein Graph 34 veranschaulicht den Verlauf des gesamten Antriebsmomentes 18 über die Zeit 24.

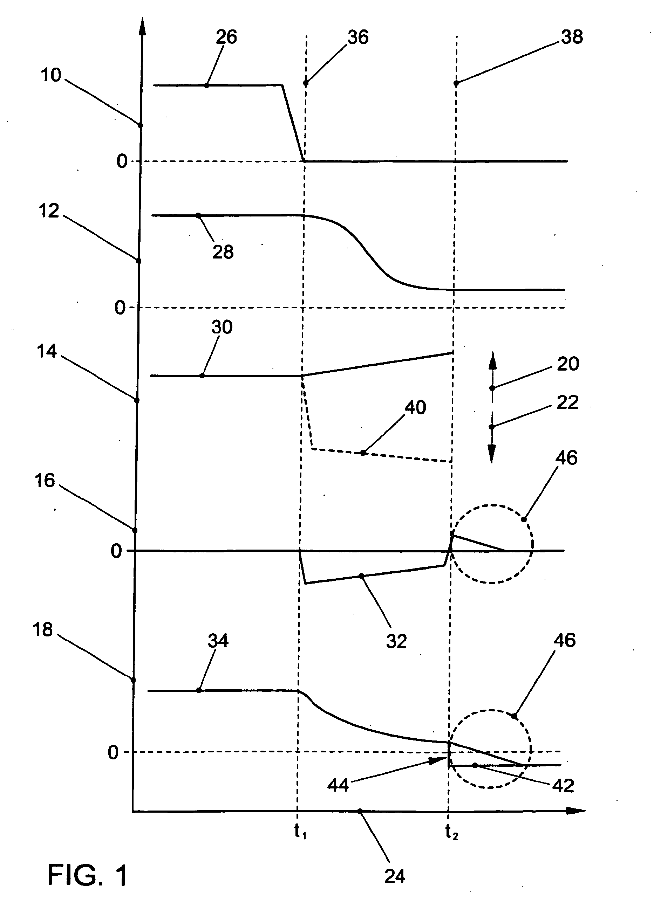

Zum Zeitpunkt t₁ 36 wird eine Schubabschaltung, d.h. ein ungefeuerter Betrieb der Brennkraftmaschine, aufgrund der Pedalstellung 0 % angefordert und es folgt die Verringerung des Antriebsmomentes 18 gemäß Graph 34 (Dashpot-Funktion). Zum Zeitpunkt t₂ 38 erfolgt dann die Schubabschaltung beispielsweise dadurch, dass die Kraftstoffzufuhr an die Brennkraftmaschine unterbrochen wird. Neben dem Graphen 30, der den zeitlichen Verlauf der Zündwinkels 14 gemäß dem erfindungsgemäßen Verfahren veranschaulicht, ist zusätzlich zum Vergleich mit gestrichelter Linie 40 ein zeitlicher Verlauf des Zündwinkels 14 gemäß einem im Stand der Technik bekannten Verfahren zum Abbau des Antriebsdrehmomentes 18 dargestellt.

Erfindungsgemäß ist es vorgesehen, dass bei einem Abbau des Antriebsmomentes 18 gemäß eines vorbestimmten zeitlichen Verlaufes, wie mit Graph 34 veranschaulicht, welcher auch als "Dashpot-Funktion" bezeichnet wird, das Antriebsmoment 18 zunächst ähnlich wie bisher über den Abbau der Zylinderfüllung 12 (Graph 28) beziehungsweise das Schließen der Drosselklappe (nicht dargestellt) zu verringern. Erfindungsgemäß ist zusätzlich eine weitere Anpassung des Ist-Drehmomentes an den Sollverlauf 34 über Drehmomenteingriffe der elektrischen Maschine vorgesehen, wobei im Zeitraum von t₁ 36 bis t₂ 38 der Zündwinkel 14 (Graph 30) für die Brennkraftmaschine in jedem Betriebspunkt, d. h. insbesondere bei jeder Einstellung der Zylinderfüllung bzw. der Drosselklappe, wirkungsgradoptimal bzw. näherungsweise wirkungsgradoptimal eingestellt wird.

Mit anderen Worten wird der mit der gestrichelten Linie 40 dargestellte herkömmliche Eingriff über den Zündwinkel 14, welcher zur schnellen Verringerung des Antriebsmomentes dient, durch den Eingriff der elektrischen Maschine mit einem negativen Antriebsmoment (Gegenmoment) im Zeitraum von t₁ 36 bis t₂ 38 ersetzt. Nach dem Zeitpunkt t₁ 36, d. h. unmittelbar nach der Anforderung des Schubbetriebes erzeugt die elektrische Maschine ein negatives Antriebsmoment gemäß Graph 32, während die Zylinderfüllung 12 gemäß Graph 28 langsam abgebaut wird. Gleichzeitig wird gemäß Graph 30 der Zündwinkel 14 auf einem für die jeweilige Zylinderfüllung 12 wirkungsgradoptimalen Niveau gehalten, d.h. der Zündwinkel 14 wird mit zunehmendem Abbau der Zylinderfüllung 12 nach früh verstellt (Pfeil 20). Dies erfolgt im Gegensatz zum herkömmlichen Abbau des Antriebsmomentes 18, bei dem der Zündwinkel 14 stark nach spät (Pfeil 22) verstellt wird, was mit gestrichelter Linie 40 zum Vergleich veranschaulicht ist. Durch diese Kombination des Eingriffes in die Zylinderfüllung 12 mit dem negativen bzw. Gegenmoment der elektrischen Maschine gemäß Graph 32 wird erreicht, dass das gesamte Antriebsmoment 18 im Zeitraum t₁ 36 bis t₂ 38 gemäß der vorbestimmten Dashpot-Funktion 34 abgebaut wird.

Nach dem Zeitpunkt t₂ 38, d. h. also nach dem Beginn der Schubabschaltung, hat die Dashpot-Funktion 34 noch einen Wert für das gesamte Antriebsmoment 18, welcher höher ist als ein Wert eines Motorschleppmomentes 42, so dass es bei dem herkömmlichen Verfahren der Schubabschaltung bei 44 zu einem Momentensprung kommt. Erfindungsgemäß ist es zusätzlich optional vorgesehen, dass die elektrische Maschine unmittelbar nach dem Zeitpunkt t₂ 38 ein positives, mit der Zeit sich verringemdes Antriebsmoment erzeugt, so dass ein stufenloser Übergang von dem gesamten Antriebsmoment 18 zum Zeitpunkt t₂ 38 auf das Motorschleppmoment 42 erzielt wird.

Die durch den generatorischen Betrieb der elektrischen Maschine im Zeitraum zwischen t₁ 36 und t₂ 38 erzeugte elektrische Energie wird vorzugsweise (mit den entsprechenden Wirkungsgraden) in einem elektrischen Energiespeicher eingespeichert und kann anschließend im weiteren Verlauf der Fahrt für eine elektromotorische Antriebsunterstützung oder die Versorgung des Fahrzeug-Bordnetzes genutzt werden. Der elektrische Energiespeicher ist dabei beispielsweise ein Batteriespeicher und/oder ein Kondensatorspeicher. Dadurch wird zumindest ein Teil der sonst durch die Spätverstellung des Zündwinkels 14 in vielen Betriebsphasen nutzlos im Abgaswärme bzw. Kühlmittelwärme umgewandelte Energie genutzt, was den Gesamtwirkungsgrad des Antriebssystems erhöht. Dieser Energieumwandlungsprozess während des generatorischen Betriebs der elektrischen Maschine dauert typischerweise nur für 200 ms bis 800 ms an, so dass sich für die Nutzung der erzeugten elektrischen Energie ein Kondensatorspeicher anbietet, da dieser die elektrische Energie mit guten Wirkungsgraden und in diesen kurzen Phasen auch mit hohen Leistungen einspeichern kann, so dass das durch die elektrische Maschine realisierbare generatorische Moment bzw. Gegenmoment nicht durch die Leistungsfähigkeit des Energiespeichers begrenzt wird.

Ist der bzw. sind die Energiespeicher ausnahmsweise zu 100 % geladen, kann weiterhin auf die konventionellen Verfahren für den Momentenabbau zurückgegriffen werden. Andererseits kann für diese kurzzeitigen Vorgänge auch stets eine kleine Einspeicherreserve vorgehalten werden, ohne dass sich die Leistungsfähigkeit des Gesamtsystems dadurch nennenswert ändert.

In einer vorteilhaften Ausgestaltung des erfindungsgemäßen Verfahrens kann auch der Momentenabbau bis auf das Motorschleppmoment 42 mittels der elektrischen Maschine erfolgen, wie zuvor erläutert und in der einzigen Fig. in Kreis 46 dargestellt, so dass ein Übergang vom gefeuerten in den ungefeuerten Betrieb zum Zeitpunkt t₂ 38 kein Momentensprung mehr erfolgt, was den Fahrkomfort im Vergleich zum heutigen Stand, gegebenenfalls auch bei direkteinspritzenden Ottomotoren im Schichtladebetrieb bzw. bei Dieselmotoren, weiter verbessert. Der Zeitpunkt t₂ 38, bei dem die Befeuerung der Brennkraftmaschine unterbrochen wird, entspricht demjenigen Zeitpunkt, bei dem die Zylinderfüllung 12 bei (zumindest nahezu) optimalem Zündwinkel die Brenngrenze erreicht. An dieser Stelle 38 wechselt die elektrische Maschine von einem negativen generatorischen zu einem positiven (motorischen) Moment. Um hierbei zum Zeitpunkt t₂ 38 einen ruckelfreien Übergang zu gestalten, ist es optional vorgesehen, nur hier eine sehr kurze Übergangsphase von beispielsweise 10 ms bis 100 ms auszuführen, innerhalb derer Zündwinkeleingriffe abweichend von wirkungsgradoptimalen Werten erlaubt werden, um das verbrennungsmotorische Moment 18 gemäß Graph 34 abzusteuern und das elektromotorische Moment gemäß Graph 32 aufzusteuern. Bei dieser Vorgehensweise kann der Drehmoment-Sollverlauf 34 auch so angepasst werden, dass die gesamte Dashpot-Funktion 34 in derselben Zeit wie beim konventionellen Verfahren abläuft.

In einer besonders vorteilhaften Ausgestaltung der Erfindung werden Zylinderfüllung 12 und Zündwinkel 14 unmittelbar vor dem Übergang in die Schubabschaltung zum Zeitpunkt t₂ 38 auf Werte eingestellt, die einen größeren Abstand zur Brenngrenze eines homogen betriebenen Ottomotors aufweisen. Beispielsweise wird die relative Zylinderfüllung 12 um 0,5 bis 6 Prozent, vorzugsweise um 1 bis 3 Prozent erhöht und/oder - falls der Zündwinkel hier nach spät verstellt wird - der Zündwinkel um mindestens 3 Grad Kurbelwinkel, vorzugsweise um mindestens 6 Grad Kurbelwinkel nach früh verstellt (jeweils gegenüber der heutigen serienmäßig ausgeführten Bedatung bzw. ausgehend vom spätest möglichen Zündwinkel unmittelbar vor dem Zeitpunkt t₂ 38). Hierdurch wird sichergestellt, dass auch bei ungünstigen Randbedingungen, beispielsweise Ungenauigkeiten bei der Luft- und Kraftstoffzumessung bzw. daraus möglicherweise resultierenden Luftverhältnisabweichungen, eine nahezu vollständige Verbrennung im Zylinder abläuft, so dass ein nachgeschaltetes Katalysatorsystem, beispielsweise bestehend aus einem oder mehreren Katalysatoren, insbesondere auch Vorkatalysator plus nachgeschaltetem NOₓ-Speicherkatalysator, in diesen instationären Phasen keine zusätzliche Belastung durch unverbrannte Kraftstoffanteile erfährt. Gleichzeitig bewirkt ein früherer Zündzeitpunkt ein Absinken der Abgas- bzw. Katalysatortemperatur, so dass insgesamt eine verringerte Alterung des Abgasnachbehandlungssystems erreicht wird.

Die neuartige Realisierung der Dashpot-Funktion 34 kann auch dann eingesetzt werden, falls anschließend, d.h. zum Zeitpunkt t₂ 38, keine Schubabschaltung sondem z. B. auf Grund zu geringer Motordrehzahl oder aus Bauteileschutzgründen der gefeuerte Betrieb mit minimalem Antriebsmoment beibehalten wird.

Das oben beschriebene Verfahren kann grundsätzlich auch bei Schaltvorgängen von automatisierten Getrieben, wie beispielsweise Wandlerautomaten, Direktschaltgetrieben oder Doppelkupplungsgetrieben, eingesetzt werden. Die Schaltzeiten von Automatikgetrieben müssen extrem kurz ausgeführt werden, um einen entsprechenden Fahrkomfort zu Gewährleisten. Gleichzeitig muss für den Schaltvorgang das Motormoment reduziert bzw. die Motor- und die Getriebedrehzahl synchronisiert werden. Für diese Momenteneingriffe ist der Füllungspfad der Brennkraftmaschine in der Regel nicht schnell genug, so dass hier bei noch hohen Zylinderfüllungen mit zum Teil extrem nach spät verstellten Zündwinkeln gearbeitet werden muss, um das von der Brennkraftmaschine erzeugte Antriebsmoment entsprechend zu reduzieren. Die dadurch entstehenden Abgastemperaturerhöhungen führen zu einer starken Katalysatorbelastung. Um dem entgegen zu wirken, muss das Gemisch teilweise angefettet werden, was einen Anstieg des Kraftstoffverbrauches bedeutet. Auch hier kann die elektrische Maschine anstelle der Zündwinkelverspätungen für den Momentenabbau bzw. die Drehzahlreduktion (auch für Motordrehzahlerhöhung bei Abwärtsschaltungen) in analoger Formen wie bei der oben beschriebenen Dashpot-Funktion eingesetzt werden. Da in diesem Fall zusätzlich die Katalysatorbelastung bzw. der Kraftstoffverbrauch durch Verzicht auf eine Gemischanreicherung bei noch hohen Luftmassenströmen reduziert wird, ergeben sich weitere erhebliche Vorteile für die Auslegung der Abgasnachbehandlungsanlage bzw. den Gesamtwirkungsgrad des Antriebes.

Mit der vorstehend beschriebenen Erfindung wird es ferner möglich, den Edelmetallgehalt von Katalysatoren abzusenken. Fahrzeuge mit magerlauffähigen Brennkraftmaschinen, die im neuen europäischen Fahrzyklus NEFZ mit thermisch ungeschädigten Katalysatoren (mit einer gespeicherten Schwefelmasse kleiner 0,2g/l Katalysatorvolumen) und einem zeitlichen gefeuerten Magerbetriebsanteil (ohne Schubphasen) mit Lambda>1,15 von zumindest 250 Sekunden (insbesondere mindestens 350 Sekunden) eine HC-Emissionen von kleiner 0,07 g/km und eine NOₓ-Emission von kleiner 0,05 g/km erreichen, werden heute im Stand der Technik mit Katalysatoren ausgerüstet, die Edelmetallgehalte von größer oder gleich 100 g/ft³ aufweisen.

Bei Einsatz von Katalysatorsystemen bestehend aus zumindest einem NOx-Speicherkatalysator und eventuell zumindest einem vorgeschalteten Vorkatalysator kann der Edelmetallgehalt zumindest eines Katalysators auf Werte kleiner 100 g/ft³, insbesondere auf kleiner oder gleich 80 g/ft³ und vorzugsweise auf kleiner oder gleich 60/40/20/10 g/ft³ abgesenkt Werden, ohne dass sich die Emissionen im NEFZ mit zunehmender Fahrzeuglaufleistung gegenüber der ursprünglichen Ausführung mit höherem Edelmetallgehalt und ohne dem erfindungsgemäßen Verfahren verschlechtern.

Auch bei konventionellen Ottomotoren bietet sich mit dem oben beschriebenen Verfahren die Möglichkeit, den Edelmetallgehalt der Katalysatoren ausgehend von den heute serienmäßig ausgeführten Werten und 10%, vorzugsweise um 20% und insbesondere bevorzugt um 30% abzusenken, ohne dass sich die Emissionen in NEFZ mit zunehmender Fahrzeuglaufleistung gegenüber der ursprünglichen Ausführung mit höherem Edelmetallgehalt und ohne dem erfindungsgemäßen Verfahren verschlechtern. Insbesondere kann der Edelmetallgehalt auf kleiner oder gleich 40/30/20/10/5 g/ft³ abgesenkt werden.

Es ist auch möglich, bei dynamischen positiven Lastwechsel in analoger Weise zu verfahren. Hier tritt häufig das Problem auf, dass bei starken Beschleunigungen durch eine sprungartige Momentenänderung Schwingungen im Antriebsstrang induziert werden, die anschließend durch Zündwinkeleingriffe wieder gedämpft werden. Dabei bietet es sich insbesondere aus Kraftstoffverbrauchsgründen an, die Dämpfung über mindestens eine der elektrischen Maschinen vorzunehmen und die generatorisch erzeugte elektrische Energie in elektrischen Energiespeichern zwischenzuspeichern.

### BEZUGSZEICHENLISTE

- 10: Winkel einer Pedalstellung in Prozent [%]
- 12: relative Zylinderfüllung in Prozent [%]
- 14: Zylinderwinkel in Grad Kurbelwinkel [°KW]
- 16: ein von der elektrischen Maschine im Antriebsstrang erzeugtes Moment in Newton-Meter [Nm]
- 18: ein gesamtes Antriebsmoment im Antriebsstrang in Newton-Meter [Nm]
- 20: Pfeil: Verstellung des Zündwinkels 14 nach früh
- 22: Pfeil: Verstellung des Zündwinkels 14 nach spät
- 24: Zeitachse
- 26: Graph: Verlauf der Pedalstellung 10 über die Zeit 24
- 28: Graph: Verlauf der relativen Zylinderfüllung 12 über die Zeit 24
- 30: Graph: Verlauf des Zündwinkels 14 über die Zeit 24
- 32: Graph: Verlauf des Momentes 16 der elektrischen Maschine über die Zeit 24
- 34: Graph: Verlauf des gesamten Antriebsmomentes 16 über die Zeit 24
- 36: Zeitpunkt t₁: Anforderung der Schubabschaltung
- 38: Zeitpunkt t₂: Durchführung der Schubabschaltung
- 40: gestrichelte Linie: Verlauf des Zündwinkels 14 über die Zeit (herkömmliches Verfahren)
- 42: Motorschleppmoment
- 44: Momentensprung (herkömmliches Verfahren)
- 46: Kreis

## Patentansprüche

1. Verfahren zum Betreiben eines Hybrid-Kraftfahrzeugs mit einer Brennkraftmaschine und mindestens einer elektrischen Maschine, wobei beim Übergang von einem ersten Betriebszustand mit einem ersten Antriebsmoment in einen zweiten Betriebszustand mit einem niedrigeren zweiten Antriebsmoment vor dem Umschalten in den zweiten Betriebszustand ein Antriebsmoment der Brennkraftmaschine über einen Abbau einer Zylinderfüllung und/oder ein Schließen einer Drosselklappe verringert wird, **dadurch gekennzeichnet, dass** während der Verringerung des Antriebsmomentes mittels des Abbaus der Zylinderfüllung und/oder Schließens der Drosselklappe ein Zündwinkel in . Abhängigkeit von der momentanen Zylinderfüllung und/oder der momentanen Stellung der Drosselklappe auf einen Wert eingestellt wird, welcher für diese momentane Zylinderfüllung und/oder für diese momentane Stellung der Drosselklappe einen optimalen bzw. näherungsweise optimalen Wirkungsgrad der Brennkraftmaschine ergibt, wobei zusätzlich das Antriebsmoment über ein dem Antriebsmoment entgegen gesetzt wirkendes Gegenmoment mindestens einer der elektrischen Maschinen verringert wird.

2. Verfahren nach Anspruch 1, **dadurch gekennzeichnet, dass** mindestens eine der elektrischen Maschinen zum Verringern des Antriebsmomentes generatorisch betrieben wird, wobei eine erzeugte elektrische Energie in einem Energiespeicher gespeichert wird.

3. Verfahren nach Anspruch 1, **dadurch gekennzeichnet, dass** der Energiespeicher ein Batteriespeicher oder ein Kondensatorspeicher ist.

4. Verfahren nach wenigstens einem der vorhergehenden Ansprüche, **dadurch gekennzeichnet, dass** der erste Betriebszustand ein gefeuerter Betrieb, der zweite Betriebszustand ein ungefeuerter Betrieb und das zweite Antriebsmoment ein Motorschleppmoment ist.

5. Verfahren nach Anspruch 4, **dadurch gekennzeichnet, dass** die Befeuerung der Brennkraftmaschine unterbrochen und in den ungefeuerten Betrieb übergegangen wird, wenn die Zylinderfüllung bei zumindest nahezu wirkungsgradoptimalen Zündwinkel die Brenngrenze erreicht.

6. Verfahren nach Anspruch 5, **dadurch gekennzeichnet, dass** unmittelbar vor dem Übergang in den ungefeuerten Betrieb die Zylinderfüllung auf einen Wert mit größerem Abstand zur Brenngrenze gestellt wird.

7. Verfahren nach Anspruch 5 oder 6, **dadurch gekennzeichnet, dass** unmittelbar vor dem Übergang in den ungefeuerten Betrieb die Zylinderfüllung ausgehend von einem Wert an der Brenngrenze um 0,5% bis 6%, insbesondere 1% bis 3%, erhöht wird.

8. Verfahren nach wenigstens einem der Ansprüche 5 bis 7, **dadurch gekennzeichnet, dass** unmittelbar vor dem Übergang in den ungefeuerten Betrieb der Zündwinkel ausgehend von einem Wert an der Brenngrenze um mindestens 3°KW, insbesondere mindestes 6°KW nach früh verstellt wird.

9. Verfahren nach wenigstens einem der Ansprüche 5 bis 8, **dadurch gekennzeichnet, dass** nach dem Übergang in den ungefeuerten Betrieb mindestens eine der elektrischen Maschinen ein antreibendes Moment derart in einem Antriebsstrang der Brennkraftmaschine erzeugt, dass ein zeitlicher Verlauf des Antriebsmomentes vom momentanen Antriebsmoment zum Zeitpunkt der Umschaltung in den ungefeuerten Betrieb bis zu einem Motorschleppmoment im ungefeuerten Betrieb der Brennkraftmaschine stufenlos verläuft.

10. Verfahren nach wenigstens einem der Ansprüche 1 bis 3, **dadurch gekennzeichnet, dass** der erste Betriebszustand ein gefeuerter Betrieb und der zweite Betriebszustand ein gefeuerter Betrieb mit minimalen Antriebsmoment ist.

11. Verfahren nach wenigstens einem der Ansprüche 1 bis 3, **dadurch gekennzeichnet, dass** der erste Betriebszustand eine Fahrt mit einer ersten Getriebeübersetzung und der zweite Betriebszustand eine Fahrt mit einer zweiten, von der ersten Getriebeübersetzung unterschiedlichen Getriebeübersetzung ist.

12. Verfahren nach wenigstens einem der vorhergehenden Ansprüche, **dadurch gekennzeichnet, dass** beim Übergang in den zweiten Betriebszustand für eine vorbestimmte Zeitdauer das Antriebsmoment über einen Zündwinkeleingriff verringert wird.

13. Verfahren nach Anspruch 12, **dadurch gekennzeichnet, dass** die Zeitdauer 10 ms bis 100 ms beträgt.

14. Verfahren nach wenigstens einem der vorhergehenden Ansprüche, **dadurch gekennzeichnet, dass** zur Verringerung des Antriebsmoment über die Zeit ein Drehmoment-Sollverlauf über die Zeit vorbestimmt ist und mindestens eine der elektrischen Maschinen während der Verringerung des Antriebsmomentes ein derartiges Gegenmoment erzeugt, dass ein Ist-Verlauf des Antriebsmomentes über die Zeit dem Drehmoment-Sollverlauf folgt.

## Claims

1. Method for operating a hybrid motor vehicle having an internal combustion engine and having at least one electric machine, wherein, in the event of a transition from a first operating state with a first drive torque into a second operating state with a lower, second drive torque, a drive torque of the internal combustion engine is reduced, before the switch into the second operating state, by means of a depletion of a cylinder charge and/or a closure of a throttle flap, **characterized in that**, during the reduction in the drive torque by means of the depletion of the cylinder charge and/or closure of the throttle flap, an ignition angle is adjusted, as a function of the present cylinder charge and/or of the present position of the throttle flap, to a value which yields an optimized or approximately optimized efficiency of the internal combustion engine,for said present cylinder charge and/or for said present position of the throttle flap, with the drive torque additionally being reduced by means of a counter-torque, which acts counter to the drive torque, of at least one of the electric machines.

2. Method according to Claim 1, **characterized in that**, in order to reduce the drive torque, at least one of the electric machines is operated as a generator, with electrical energy which is generated being stored in an energy store.

3. Method according to Claim 1, **characterized in that** the energy store is a battery store or a capacitor store.

4. Method according to one of the preceding claims, **characterized in that** the first operating state is a fired mode, the second operating state is a non-fired mode and the second drive torque is an engine drag torque.

5. Method according to Claim 4, **characterized in that** the firing of the internal combustion engine is interrupted and a switch is made into the non-fired mode when the cylinder charge reaches the combustion limit at an ignition angle which is at least approximately optimized in terms of efficiency.

6. Method according to Claim 5, **characterized in that**, directly before the transition into the non-fired mode, the cylinder charge is set to a value spaced further apart from the combustion limit.

7. Method according to Claim 5 or 6, **characterized in that**, directly before the transition into the non-fired mode, the cylinder charge is increased by 0.5% to 6%, in particular 1% to 3%, proceeding from a value at the combustion limit.

8. Method according to at least one of Claims 5 to 7, **characterized in that**, directly before the transition into the non-fired mode, the ignition angle is adjusted in the early direction by at least 3°CA, in particular at least 6°CA, proceeding from a value at the combustion limit.

9. Method according to at least one of Claims 5 to 8, **characterized in that**, after the transition into the non-fired mode, at least one of the electric machines generates a driving torque in a drive train of the internal combustion engine in such a way that a profile of the drive torque over time runs continuously from the present drive torque at the time of the switch into the non-fired mode to an engine drag torque in the non-fired mode of the internal combustion engine.

10. Method according to at least one of Claims 1 to 3, **characterized in that** the first operating state is a fired mode and the second operating state is a fired mode with minimum drive torque.

11. Method according to at least one of Claims 1 to 3, **characterized in that** the first operating state is driving with a first transmission ratio, and the second operating state is driving with a second transmission ratio which differs from the first transmission ratio.

12. Method according to at least one of the preceding claims, **characterized in that**, upon the transition into the second operating state, the drive torque is reduced for a predetermined time period by means of an ignition angle adjustment.

13. Method according to Claim 12, **characterized in that** the time period is 10 ms to 100 ms.

14. Method according to at least one of the preceding claims, **characterized in that**, for the reduction of the drive torque over time, a nominal torque profile over time is predetermined and, during the reduction in drive torque, at least one of the electric machines generates a counter-torque which is such that an actual profile of the drive torque over time follows the nominal torque profile.

## Revendications

1. Procédé pour faire fonctionner un véhicule hybride, comprenant un moteur à combustion interne et au moins un moteur électrique, dans lequel, lors du passage d'un premier état de fonctionnement avec un premier couple d'entraînement dans un deuxième état de fonctionnement avec un deuxième couple de fonctionnement plus faible, avant de commuter dans le deuxième étant de fonctionnement, un couple d'entraînement du moteur à combustion interne est réduit par une diminution d'un remplissage du cylindre et/ou une fermeture d'un clapet d'étranglement, **caractérisé en ce que** pendant la réduction du couple d'entraînement au moyen de la diminution du remplissage du cylindre et/ou de la fermeture du clapet d'étranglement, un angle d'allumage est ajusté en fonction du remplissage momentané du cylindre et/ou de la position momentanée du clapet d'étranglement, à une valeur qui produit, pour ce remplissage momentané du cylindre et/ou cette position momentanée du clapet d'étranglement, un rendement optimal ou pratiquement optimal du moteur à combustion interne, le couple d'entraînement étant en outre réduit par le biais d'un couple conjugué d'au moins l'un des moteurs électriques, agissant à l'encontre du couple d'entraînement.

2. Procédé selon la revendication 1, **caractérisé en ce qu'**au moins l'un des moteurs électriques est entraîné en tant que générateur pour réduire le couple d'entraînement, une énergie électrique produite étant stockée dans un accumulateur d'énergie.

3. Procédé selon la revendication 1, **caractérisé en ce que** l'accumulateur d'énergie est un accumulateur à batterie ou un accumulateur à condensateur.

4. Procédé selon au moins l'une quelconque des revendications précédentes, **caractérisé en ce que** le premier état de fonctionnement est un fonctionnement en service, le deuxième état de fonctionnement est un fonctionnement hors service et le deuxième couple d'entraînement est un couple d'inertie de moteur.

5. Procédé selon la revendication 4, **caractérisé en ce que** le fonctionnement de service du moteur à combustion interne est interrompu et il passe au fonctionnement hors service lorsque le remplissage du cylindre atteint la limite de combustion pour un angle d'allumage au moins pratiquement optimal en termes de rendement.

6. Procédé selon la revendication 5, **caractérisé en ce qu'**immédiatement avant le passage dans le fonctionnement hors service, le remplissage du cylindre est ajusté à une valeur avec un plus grand écart par rapport à la limite de combustion.

7. Procédé selon la revendication 5 ou 6, **caractérisé en ce qu'**immédiatement avant le passage dans le fonctionnement hors service, le remplissage du cylindre est augmenté à partir d'une valeur à la limite de combustion, de 0,5 % à 6 %, notamment de 1 % à 3 %.

8. Procédé selon au moins l'une quelconque des revendications 5 à 7, **caractérisé en ce qu'**immédiatement avant le passage dans le fonctionnement hors service, l'angle d'allumage est ajusté en avance à partir d'une valeur à la limite de combustion d'un angle de vilebrequin d'au moins 3°, notamment de 6°.

9. Procédé selon au moins l'une quelconque des revendications 5 à 8, **caractérisé en ce qu'**après le passage au fonctionnement hors service, au moins l'un des moteurs électriques produit un couple d'entraînement dans une chaîne de transmission du moteur à combustion interne, de telle sorte qu'une courbe dans le temps du couple d'entraînement depuis le couple d'entraînement momentané à l'instant de la commutation au mode hors service jusqu'à un couple d'inertie de moteur dans le fonctionnement hors service du moteur à combustion interne se produise de manière progressive.

10. Procédé selon au moins l'une quelconque des revendications 1 à 3, **caractérisé en ce que** le premier état de fonctionnement est un fonctionnement en service et le deuxième état -de fonctionnement est un fonctionnement en service avec un couple d'entraînement minimal.

11. Procédé selon .au moins l'une quelconque des revendications 1 à 3, **caractérisé en ce que** le premier état de fonctionnement est une conduite avec un premier rapport de transmission et le deuxième état de fonctionnement est une conduite avec un deuxième rapport de transmission différent du premier rapport de transmission.

12. Procédé selon au moins l'une quelconque des revendications précédentes, **caractérisé en ce que** lors de la transition au deuxième état de fonctionnement, pendant une durée prédéterminée, le couple d'entraînement est réduit en intervenant sur l'angle d'allumage.

13. Procédé selon la revendication 12, **caractérisé en ce que** la durée est de 10 ms à 100 ms.

14. Procédé selon au moins l'une quelconque des revendications précédentes, **caractérisé en ce que** pour réduire le couple d'entraînement au cours du temps, on prédéfinit une allure de consigne du couple au cours du temps et au moins l'un des moteurs électriques pendant la réduction du couple d'entraînement produit un couple opposé tel qu'une allure instantanée du couple d'entraînement au cours du temps suive l'allure de consigne du couple.
